# EUROPÄISCHE PATENTSCHRIFT

(11) **EP 2 927 052 B1**
(45) Veröffentlichungstag und Bekanntmachung des Hinweises auf die Patenterteilung: **03.03.2021**
(21) Anmeldenummer: 15158177.4
(22) Anmeldetag: 09.03.2015
(51) Int. Cl.: B60Q 1/14, B60Q 1/18

(54) **VERFAHREN ZUM BETREIBEN EINES ABBIEGELICHTS EINES FAHRZEUGS UND FAHRZEUGBELEUCHTUNG**
METHOD FOR OPERATING A CORNERING LIGHT OF A VEHICLE AND VEHICLE LIGHTING
PROCÉDÉ DE FONCTIONNEMENT D'UN FEU DE VIRAGE D'UN VÉHICULE ET ÉCLAIRAGE DE VÉHICULE

(30) Priorität: 02.04.2014 DE 102014206327
(43) Veröffentlichungstag der Anmeldung: 07.10.2015
(73) Patentinhaber: Robert Bosch GmbH, 70442 Stuttgart (DE)
(72) Erfinder: Prenzel, Ralf, 31141 Hildesheim (DE)

(56) Entgegenhaltungen:
- EP-A2- 2 030 838
- DE-A1-102004 053 320
- DE-A1-102007 038 077
- DE-A1-102008 014 182
- DE-A1-102009 022 637
- DE-A1-102011 055 794
- DE-A1-102011 105 983
- DE-A1-102012 200 431
- US-A1- 2003 137 849
- US-A1- 2011 205 049

## Beschreibung

Die Erfindung betrifft ein Verfahren zum Betreiben eines Abbiegelichts eines Fahrzeugs. Die Erfindung betrifft ferner eine Fahrzeugbeleuchtung für ein Fahrzeug. Die Erfindung betrifft des Weiteren ein Computerprogramm.

### Stand der Technik

Die Offenlegungsschrift DE 10 2004 053 320 A1 zeigt einen Fahrzeugscheinwerfer, der einen Hauptleuchtkörper aufweist, wobei der Fahrzeugscheinwerfer aufweist:
eine Basis-Leuchtenteileinheit, die so ausgebildet ist, dass sie Licht zur Ausbildung eines Lichtintensitätsverteilungsmusters für Abblendlicht abstrahlt;
und eine zusätzliche Leuchtenteileinheit, die so ausgebildet ist, dass sie Licht zur Ausbildung eines zusätzlichen Lichtintensitätsverteilungsmusters abstrahlt, dadurch, dass sie zeitweilig in dem Hauptleuchtenkörper leuchtet,
wobei eine Lichtquellenlampe als Lichtquelle der Basis-Leuchtenteileinheit eingesetzt wird, und ein Halbleiter-Lichtemissionselement als Lichtquelle der zusätzlichen Leuchtenteileinheit eingesetzt wird.

Die Offenlegungsschrift EP 2 030 838 A1 zeigt ein Kraftfahrzeug mit einem Navigationssystem und einem AFL-Scheinwerfersystem, wobei eine Ausrichtung mindestens eines Scheinwerfers des Kraftfahrzeugs mit Informationen des Navigationssystems beeinflussbar ist, wobei eine Anzahl an Fahrspuren als Information des Navigationssystems vorliegt und bei der Ausrichtung des Scheinwerfers berücksichtigbar ist.

Die Offenlegungsschrift DE 10 2012 200 431 A1 zeigt ein Verfahren zur Bestimmung eines Vorliegens einer Kreuzung in einem von einem Fahrzeug befahrenen Straßenverlauf, wobei das Verfahren folgende Schritte aufweist: Überprüfen, ob zumindest ein in einem aktuell von dem Fahrzeug befahrenen Straßenverlauf erkanntes Merkmal zumindest eine Kreuzungsbedingung erfüllt; und
Erzeugen eines Kreuzungssignals, wenn das zumindest eine Merkmal die zumindest eine Kreuzungsbedingung erfüllt, wobei das Kreuzungssignal das Vorliegen einer Kreuzung anzeigt.

Die Offenlegungsschrift DE 10 2011 105 983 A1 offenbart ein Nahbereich-Kurvenlicht im Außenspiegel eines Fahrzeugs.

Die Offenlegungsschrift DE 10 2009 022 637 A1 offenbart ein Verfahren und eine Vorrichtung zur Ansteuerung der Beleuchtungseinrichtung eines Kraftfahrzeugs.

Die Offenlegungsschrift DE 10 2011 055 794 A1 offenbart ein Verfahren zur Steuerung von Kraftfahrzeugscheinwerfern und eine Anordnung zur Durchführung des Verfahrens.

Die Offenlegungsschrift DE 10 2007 038 077 A1 offenbart ein Verfahren und eine Vorrichtung zur Fahrlichtsteuerung eines Fahrzeugs.

Die Offenlegungsschrift DE 10 2008 014 182 A1 offenbart ein Verfahren zur Fahrlichtsteuerung eines Fahrzeugs.

Die Offenlegungsschrift US 2003/137849 A1 offenbart ein Fahrzeugbeleuchtungssystem.

Die Offenlegungsschrift US 2011/205049 A1 offenbart ein Beleuchtungssystem.

Eine Möglichkeit, einen Kreuzungsbereich beim Abbiegen besser zu beleuchten, bietet beispielsweise ein statisches Abbiegelicht, welches in der Patentschrift US 5,769,524 beschrieben ist. Beim Setzen eines Fahrtrichtungsanzeigers wird üblicherweise ein zusätzlich zu den Frontscheinwerfern installiertes Licht, das statische Abbiegelicht, an der entsprechenden Seite des Fahrzeugs zugeschaltet. Die Ausleuchtung erfolgt üblicherweise bis annähernd 90° und ca. 30 bis 40 Meter weit seitlich zur Fahrtrichtung und ist nicht veränderbar oder einstellbar.

Je nach der konkreten Umgebung des Fahrzeugs kann es daher passieren, dass Verkehrsteilnehmer durch einen Lichtkegel, der mittels des Abbiegelichts erzeugt wird, geblendet werden.

### Offenbarung der Erfindung

Die der Erfindung zugrundeliegende Aufgabe kann daher darin gesehen werden, ein Verfahren zum Betreiben eines Abbiegelichts eines Fahrzeugs bereitzustellen, das die bekannten Nachteile überwindet und eine Blendgefahr für Verkehrsteilnehmer verringert.

Die der Erfindung zugrundeliegende Aufgabe kann auch darin gesehen werden, eine entsprechende Fahrzeugbeleuchtung für ein Fahrzeug bereitzustellen.

Des Weiteren kann die der Erfindung zugrundeliegende Aufgabe darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Abbiegelichts eines Fahrzeugs bereitgestellt, wobei eine Leuchtcharakteristik des Abbiegelichts basierend auf zumindest einem Parameter gesteuert wird, um einen mittels des Abbiegelichts erzeugbaren Lichtkegel einzustellen.

Gemäß einem weiteren Aspekt wird eine Fahrzeugbeleuchtung für ein Fahrzeug bereitgestellt, umfassend ein Abbiegelicht und eine Steuerung zur Steuerung einer Leuchtcharakteristik des Abbiegelichts in Abhängigkeit von zumindest einem Parameter, um einen mittels des Abbiegelichts erzeugbaren Lichtkegel einstellen zu können.

Nach einem weiteren Aspekt wird ein Computerprogramm bereitgestellt, welches Programmcode zur Durchführung des Verfahrens zum Betreiben eines Abbiegelichts eines Fahrzeugs umfasst, wenn das Computerprogramm auf einem Computer, insbesondere einer Steuerung, ausgeführt wird.

Gemäß einem weiteren Aspekt wird ein Fahrzeug bereitgestellt, welches die Fahrzeugbeleuchtung für ein Fahrzeug umfasst.

Ausführungsformen hinsichtlich des Verfahrens ergeben sich analog aus Ausführungsformen hinsichtlich der Fahrzeugbeleuchtung und umgekehrt. Entsprechende Ausführungen, die im Zusammenhang mit der Fahrzeugbeleuchtung gemacht werden, gelten analog für das Verfahren und umgekehrt.

Durch das Einstellen des erzeugbaren Lichtkegels in Abhängigkeit von einem Parameter, kann in vorteilhafter Weise eine konkret vorliegende Situation optimal berücksichtigt werden, um eine Blendung von Verkehrsteilnehmern zu verringern oder zu vermeiden. Der Parameter beschreibt also insbesondere eine momentan vorliegende Situation.

Erfindungsgemäß ist vorgesehen, dass zumindest ein eine Eigenschaft einer Umgebung des Fahrzeugs beschreibender Umgebungsparameter als Parameter ermittelt wird, wobei eine Leuchtcharakteristik des Abbiegelichts basierend auf dem ermittelten Umgebungsparameter gesteuert wird, um einen mittels des Abbiegelichts erzeugbaren Lichtkegel einzustellen.

Erfindungsgemäß ist die Steuerung ausgebildet, die Leuchtcharakteristik des Abbiegelichts in Abhängigkeit von zumindest einem eine Eigenschaft einer Umgebung des Fahrzeugs beschreibenden Umgebungsparameter als Parameter zu steuern, um einen mittels des Abbiegelichts erzeugbaren Lichtkegel einstellen zu können.

Durch das Einstellen des erzeugbaren Lichtkegels in Abhängigkeit von dem ermittelten Umgebungsparameter kann in vorteilhafter Weise eine Umgebung des Fahrzeugs insbesondere dahingehend berücksichtigt werden, dass eine Blendung von Verkehrsteilnehmern vermieden wird. Ferner kann durch die Berücksichtigung der Fahrzeugumgebung ein Seitenbereich des Fahrzeugs für unterschiedliche Umgebungen optimal ausgeleuchtet werden. Dadurch kann in vorteilhafter Weise eine Sicht für einen Fahrer des Fahrzeugs verbessert werden. Der Fahrer kann insbesondere in vorteilhafter Weise besser Hindernisse erkennen. Eine Fahrzeugsicherheit kann dadurch in vorteilhafter Weise erhöht werden.

Ein Abbiegelicht im Sinne der vorliegenden Erfindung bezeichnet insbesondere ein Licht, welches ausgebildet ist, einen Seitenbereich des Fahrzeugs auszuleuchten. Ein Abbiegelicht im Sinne der vorliegenden Erfindung ist verschieden von einem Nebellicht, verschieden von einem Abblendlicht und verschieden von einem Fernlicht.

Erfindungsgemäß ist vorgesehen, dass der Umgebungsparameter eine Steigung und/oder eine Querneigung einer Straße ist, in die das Fahrzeug einbiegen will, und eine Steigung und/oder eine Querneigung einer Straße ist, auf welcher das Fahrzeug momentan fährt. Eine Steigung im Sinne der vorliegenden Erfindung kann insbesondere auch ein Gefälle sein. Es sind also zwei Umgebungsparameter vorgesehen sein: Einer der zwei Umgebungsparameter ist eine Steigung einer Straße, in die das Fahrzeug einbiegen will. Der andere der zwei Umgebungsparameter ist eine Steigung einer Straße, auf welcher das Fahrzeug momentan fährt. Die Straße, in die das Fahrzeug einbiegen will, kann beispielsweise auch als die kreuzende Straße bezeichnet werden, also die Straße, die die Straße kreuzt, auf welcher das Fahrzeug momentan oder aktuell fährt.

In einer Ausführungsform kann zusätzlich vorgesehen sein, dass der Umgebungsparameter eine Breite der Straße ist, in die das Fahrzeug einbiegen will, und/oder eine Breite der Straße ist, auf welcher das Fahrzeug momentan fährt.

In einer Ausführungsform kann der Umgebungsparameter eine Steigung respektive ein Gefälle beider Straßen sein, also der Straße, aus der das Fahrzeug kommt und die Straße, in das Fahrzeug einbiegen will.

In einer anderen Ausführungsform kann der Umgebungsparameter eine Querneigung der Straße sein, in die das Fahrzeug einbiegen will und/oder auf der das Fahrzeug fährt.

Nach einer weiteren Ausführungsform kann der Parameter eine Neigung des Fahrzeugs sein.

Gemäß einer anderen Ausführungsform kann der Parameter eine Querneigung des Fahrzeugs.

In einer anderen Ausführungsform kann der Parameter eine Längsneigung des Fahrzeugs sein.

In einer Ausführungsform können mehrere Parameter (insbesondere mehrere Umgebungsparameter) vorgesehen sein. Die Parameter (vorzugsweise Umgebungsparameter) können insbesondere gleich oder vorzugsweise unterschiedlich gebildet sein. Ausführungsformen hinsichtlich eines Parameters (insbesondere eines Umgebungsparameters) ergeben sich analog aus Ausführungsformen hinsichtlich mehrerer Parameter (insbesondere mehrerer Umgebungsparameter) und umgekehrt.

Je nach Steigung wird bei einem statischen, also nicht einstellbaren, Lichtkegel der Seitenbereich unterschiedlich weit ausgeleuchtet werden. Bei einer stärkeren Steigung weniger weit, bei einem Gefälle zwar weiter, wobei dies aber eine Blendgefahr für Verkehrsteilnehmer mit sich bringen kann. Diese bekannten Nachteile werden aber vermieden, da der Lichtkegel gemäß dieser Ausführungsform in Abhängigkeit von der Steigung eingestellt wird. Dies ist insbesondere bei einem Abbiegevorgang von Vorteil. Dadurch kann in vorteilhafter Weise eine bessere Einsicht in die einzubiegende Straße bewirkt werden.

Vorzugsweise können folgende drei Situationen vorkommen oder vorgesehen sein:
1.) Die Straße S1, auf der das Fahrzeug fährt, ist eben, die Straße S2, in die das Fahrzeug einbiegen will, hat eine Steigung oder ein Gefälle.
2.) S1 hat eine Steigung/oder ein Gefälle, S2 ist eben.
3.) Die Kombination aus den Situationen 1.) und 2.): Die Straße S1 hat eine Steigung oder ein Gefälle und die Straße S2 hat eine Steigung oder ein Gefälle.

Die Steigungen oder Gefälle der Straßen können vorzugsweise aus den digitalen Kartendaten der Navigation (also eines Navigationssystems) erhalten oder ermittelt werden.

Nach einer anderen Ausführungsform kann die Steigung der Straße S1 und/oder S2 geschätzt werden. Für die Schätzung der Steigung der Straße S1 kann beispielsweise ein Neigungssensor (oder mehrere Neigungssensoren) des Fahrzeugs verwendet werden. Denn die Neigung des Fahrzeugs entspricht in der Regel in erster Näherung der Steigung der Straße. Die Steigung der Straße S2 und/oder S1 kann beispielsweise mittels eines oder mehrere Kamerasysteme bestimmt oder ermittelt werden.

Gemäß einer weiteren Ausführungsform kann vorgesehen sein, dass noch folgende Parameter zusätzlich oder alternativ verwendet werden:
a) Neigung des Fahrzeugs in Längsrichtung, zum Beispiel wegen Beladung des Fahrzeugs,
b) Querneigung des Fahrzeugs
c) Querneigung der Straße, also die Neigung der Straße S1 und/oder S2 quer zur Fahrrichtung,.
   a. Die Querneigung der Straße S1 kann beispielsweise über die Neigungssensoren des Fahrzeugs ermittelt werden.
   b. Insbesondere kann die Querneigung der Straßen aus digitalen Kartendaten ermittelt werden.
   c. Die Querneigung kann beispielsweise mittels eines oder mehrere Kamerasysteme bestimmt oder ermittelt werden.

In einer weiteren Ausführungsform kann vorgesehen sein, dass die Leuchtcharakteristik eine Leuchtweite des Lichtkegels umfasst, wobei die Leuchtweite mittels einer Änderung einer Lichtintensität eines Leuchtmittels des Abbiegelichts gesteuert wird.

Dadurch wird in vorteilhafter Weise eine einfache und schnelle Möglichkeit bereitgestellt, die Leuchtweite zu ändern und so in vorteilhafter Weise eine Blendgefahr für Verkehrsteilnehmer zu verringern.

In noch einer Ausführungsform kann vorgesehen sein, dass die Leuchtcharakteristik einen Abstrahlwinkel des Lichtkegels umfasst, wobei der Abstrahlwinkel mittels einer variabel positionierbaren lichtundurchlässigen Abblendeinrichtung gesteuert wird.

So kann beispielsweise verhindert werden, dass der Lichtkegel zu hoch abstrahlt und Verkehrsteilnehmer blendet. Eine Abblendeinrichtung kann gemäß einer Ausführungsform eine Abdeckscheibe umfassen, die zumindest teilweise Licht, welches von dem Abbiegelicht abgestrahlt wird, abdecken kann.

In einer anderen Ausführungsform kann vorgesehen sein, dass das Abbiegelicht mehrere Leuchtmittel umfasst, die zum Einstellen des Lichtkegels einzeln ab- oder angeschaltet werden.

Dadurch kann in vorteilhafter Weise eine einfache und schnelle Möglichkeit bereitgestellt werden, die Leuchtweite zu ändern, so dass in vorteilhafter Weise eine Blendgefahr für Verkehrsteilnehmer verringert werden kann.

In einer Ausführungsform kann vorgesehen sein, dass die Leuchtmittel zumindest teilweise als Leuchtdioden, insbesondere organische Leuchtdioden, gebildet sind.

In einer weiteren Ausführungsform kann vorgesehen sein, dass mehrere Umgebungsparameter ermittelt werden, wobei eine Leuchtcharakteristik des Abbiegelichts basierend auf den mehreren ermittelten Umgebungsparametern gesteuert wird, um einen mittels des Abbiegelichts erzeugbaren Lichtkegel einzustellen. Die ermittelten Umgebungsparameter können insbesondere gleich oder vorzugsweise unterschiedlich gebildet sein.

In einer anderen Ausführungsform kann vorgesehen sein, dass der erzeugbare Lichtkegel eingestellt wird, bevor das Abbiegelicht eingeschaltet wird. Das Abbiegelicht ist also gemäß dieser Ausführungsform abgeschaltet, während der erzeugbare Lichtkegel eingestellt wird.

Ein eingeschaltetes Abbiegelicht im Sinne der vorliegenden Erfindung bezeichnet insbesondere ein Abbiegelicht, welches Licht abstrahlt. Ein aus- oder abgeschaltetes Abbiegelicht im Sinne der vorliegenden Erfindung bezeichnet insbesondere ein Abbiegelicht, welches kein Licht abstrahlt. Dennoch kann sowohl im abgeschalteten als auch im angeschalteten Zustand eine Leuchtcharakteristik gesteuert werden in Abhängigkeit von einem oder mehreren ermittelten Umgebungsparametern.

Somit kann in vorteilhafter Weise sichergestellt werden, dass ein optimaler erzeugbarer Lichtkegel eingestellt wird, bevor tatsächlich der Lichtkegel abgestrahlt wird (also erzeugt wird), also das Abbiegelicht angeschaltet oder eingeschaltet wird. Eine Blendgefahr wird somit noch weiter verringert verglichen mit dem Fall, in welchem das Abbiegelicht bereits Licht abstrahlt und erst dann den Lichtkegel neu einstellt basierend auf dem ermittelten Umgebungsparameter.

In einer Ausführungsform kann vorgesehen sein, dass der erzeugte Lichtkegel im Betrieb des aktivierten oder eingeschalteten Abbiegelichts abhängig von zumindest einem weiteren Parameter eingestellt wird. Der weitere Parameter kann beispielsweise ein Parameter, insbesondere ein Umgebungsparameter, sein, wie er im Lichte der vorliegenden Beschreibung verwendet wird. Insbesondere können mehrere weitere Parameter verwendet werden, die insbesondere gleich oder vorzugsweise unterschiedlich gebildet sind. Somit sind auch während des eingeschalteten Zustands Anpassungen der Steuerung an die aktuellen Parameter möglich, zum Beispiel während der Annäherung an die Kreuzung und/oder während des Abbiegevorgangs.

Gemäß einer weiteren Ausführungsform kann zusätzlich vorgesehen sein, dass der Umgebungsparameter eine Breite der Straße ist, auf welcher das Fahrzeug momentan fährt.

Durch die Kenntnis der Breite kann in vorteilhafter Weise eine Entfernung, bei der ein vordefinierter Höhenwert einer abfallenden Straße, in die das Fahrzeug einbiegen will, durch den Lichtkegel erreicht wird, genauer bestimmt werden.

Gemäß einer weiteren Ausführungsform kann vorgesehen sein, dass der Umgebungsparameter eine Querneigung der Straße ist, auf welcher das Fahrzeug momentan fährt.

Durch die Kenntnis der Querneigung der Straße kann in vorteilhafter Weise eine Entfernung, bei der ein vordefinierter Höhenwert einer abfallenden Straße, in die das Fahrzeug einbiegen will, durch den Lichtkegel erreicht wird, genauer bestimmt werden. Zusätzlich zur Breite der Straße beeinflusst der Winkel der Querneigung der Straße den Lichtkegel.

Gemäß einer weiteren Ausführungsform kann vorgesehen sein, dass der Umgebungsparameter eine Neigung oder Querneigung des Fahrzeugs ist. Eine Neigung des Fahrzeugs kann mittels eines Neigungssensors, zum Beispiel Neigungssensoren eines Getriebes, und/oder Nickwinkelsensoren ermittelt werden.

Durch die Kenntnis der Neigung des Fahrzeugs kann in vorteilhafter Weise eine Entfernung, bei der ein vordefinierter Höhenwert einer abfallenden Straße, in die das Fahrzeug einbiegen will, durch den Lichtkegel erreicht wird, genauer bestimmt werden. Ist (insbesondere auch zusätzlich zur Straßensteigung) das Fahrzeug auch noch geneigt (zum Beispiel durch eine Ladung und/oder einen Anhänger) wird der Lichtkegel beeinflusst. Dies wird erfindungsgemäß berücksichtigt, indem der Lichtkegel abhängig von der Fahrzeugneigung eingestellt wird.

Gemäß einer weiteren Ausführungsform kann vorgesehen sein, dass als Parameter oder als Umgebungsparameter eine die Straße beschreibende Eigenschaft der Straßen zusätzlich oder alternativ verwendet werden kann. Bei der Straße kann es sich beispielsweise um die Straße handeln, in die das Fahrzeug einbiegen will, und/oder auf der das Fahrzeug momentan fährt. Der Parameter oder der Umgebungsparameter beschreibt also insbesondere eine Eigenschaft der Straße S1 und/oder der Straße S2. Eine Eigenschaft kann beispielsweise eine Krümmung der Fahrbahn, eine Oberfläche, ein Oberflächebelag und/oder ein Straßenbelag sein

Es kann vorgesehen sein, dass der Umgebungsparameter eine Information ist, ob sich ein Verkehrsteilnehmer in einem mittels des erzeugbaren Lichtkegels ausleuchtbaren Bereich befindet oder nicht.

Wenn sich kein Verkehrsteilnehmer in dem erzeugbaren Lichtkegel befindet, kann der Lichtkegel neu eingestellt werden, um einen verglichen zu dem bisher eingestellten Lichtkegel größeren Bereich auszuleuchten, der zuvor neu ermittelt wird. Wenn sich ein Verkehrsteilnehmer in dem Bereich befindet, kann der Lichtkegel neu eingestellt werden, um einen neuen ausleuchtbaren Bereich zu ermitteln. Ein Blenden des Verkehrsteilnehmers kann somit in vorteilhafter Weise vermieden werden. Beispielsweise können Positionsdaten von einem Verkehrsteilnehmer empfangen werden, die eine momentane und/oder zukünftige Position des Verkehrsteilnehmers anzeigen.

Ein Verkehrsteilnehmer im Sinne der vorliegenden Erfindung kann beispielsweise ein weiteres Fahrzeug, ein Fahrradfahrer oder ein Fußgänger sein. Es können insbesondere auch mehrere Verkehrsteilnehmer vorgesehen sein, die insbesondere gleich oder insbesondere unterschiedlich sind.

In einer Ausführungsform können mehrere Abbiegelichter vorgesehen sein, die insbesondere gleich oder vorzugsweise unterschiedlich gebildet sind.

In einer Ausführungsform kann ein Navigationssystem (oder Navigationseinheit) vorgesehen sein, dass digitale Kartendaten umfasst, die Steigungswerte (also Steigungen) für Straßen aufweisen.

Nach einer Ausführungsform kann eine Steigung der aktuell befahrenen Straße durch eine Neigung des Fahrzeugs mittels eines Neigungssensors, zum Beispiel Neigungssensoren eines Getriebes, und/oder Nickwinkelsensoren ermittelt werden.

Wenn im Rahmen dieser Beschreibung von einer Steuerung des Abbiegelichts gesprochen wird, so soll damit die Steuerung der Leuchtcharakteristik des Abbiegelichts gemeint sein.

Zum Ermitteln des Umgebungsparameters kann nach einer Ausführungsform eine Parameterermittlungseinrichtung vorgesehen sein, die ausgebildet ist, einen die Umgebung des Fahrzeugs beschreibenden Umgebungsparameter zu ermitteln. Beispielsweise umfasst die Parameterermittlungseinrichtung ein Navigationssystem und/oder einen oder mehrere Neigungssensoren und/oder einen oder mehrere Umfeldsensoren, wie zum Beispiel Videosensoren und/oder Radarsensoren und/oder Ultraschallsensoren und/oder Lasersensoren und/oder Lidarsensoren.

In einer Ausführungsform kann vorgesehen sein, dass der Parameter, insbesondere die Steigungsdaten (also die Steigung), vom Fahrzeug empfangen wird. Das heißt also, dass der Parameter von außerhalb des Fahrzeugs an das Fahrzeug gesendet oder geliefert wird. Beispielsweise kann der Parameter von einem weiteren Fahrzeug an das Fahrzeug gesendet werden. Diese Kommunikation kann auch als Car2Car-Kommunikation bezeichnet werden. Beispielsweise kann der Parameter (zum Beispiel Steigungsdaten, also Steigungswerte) von einer Infrastruktur, insbesondere eine Sendesäule an einer Kreuzung, an das Fahrzeug gesendet werden. Diese Kommunikation kann auch als Car2X-Kommunikation bezeichnet werden. Beispielsweise kann der Parameter von einem externen Server an das Fahrzeug gesendet werden.

Die Erfindung wird im Folgenden anhand von bevorzugten Ausführungsbeispielen näher erläutert. Hierbei zeigen
- Figur 1: ein Fahrzeug, welches auf einer Straße fährt und nach links abbiegen will in eine weitere Straße;
- Figur 2: eine Situation analog zu der Situation gemäß Figur 1, wobei die beiden Straßen unterschiedliche Steigungen aufweisen;
- Figur 3: ein Ablaufdiagramm eines Verfahrens zum Betreiben eines Abbiegelichts eines Fahrzeugs;
- Figur 4: ein Fahrzeug, welches auf einer Straße fährt und nach links in eine weitere Straße einbiegen will;
- Figur 5: ein Ablaufdiagramm eines weiteren Verfahrens zum Betreiben eines Fahrzeugs;
- Figur 6: eine Fahrzeugbeleuchtung für ein Fahrzeug; und
- Figur 7: ein Fahrzeug umfassend eine Fahrzeugbeleuchtung.

Im Folgenden können für gleiche Merkmale gleiche Bezugszeichen verwendet werden.

Die nachfolgend beschriebenen Situationen sind bis auf einige Unterschiede, die an den entsprechenden Stellen erwähnt werden, zur besseren Veranschaulichung gleich. Insofern werden zuvorderst die Gemeinsamkeiten allgemein und noch ohne Bezugszeichen beschrieben, wobei diese Gemeinsamkeiten für die nachfolgend beschriebenen Situationen gelten.

Ein Fahrzeug fährt auf einer Straße und wird an der nächsten Kreuzung nach links abbiegen. Das Fahrzeug ist beispielsweise mit einem Navigationssystem einschließlich der notwendigen Sensoren zur Positionsbestimmung, zum Beispiel einem GPS-Sensor, ausgerüstet. Das Fahrzeug hat Scheinwerfer, die jeweils als Abbiegelicht ausgebildet sind. Die Scheinwerfer sind vorzugsweise seitlich vorne unten am Kotflügel auf beiden Seiten des Fahrzeugs befestigt.

Weiterhin sind die Scheinwerfer vorzugsweise steuerbar, damit die Leuchtcharakteristik des Lichts beeinflussbar ist, also eingestellt werden kann. Das heißt insbesondere, dass die Scheinwerfer zum Beispiel automatisch einstellbar und vorzugsweise zumindest teilweise abblendbar, zum Beispiel durch eine lichtundurchlässige Abblendeinrichtung, die die Lichtsausbreitung einschränken, und/oder auch durch Ab- und Zuschalten von einzelnen Leuchtmitteln, zum Beispiel Leuchtdioden, um das Licht noch gezielter steuern zu können. Mit dieser Fahrzeugbeleuchtung kann der erzeugbare oder entstehende Lichtkegel gezielt ausgerichtet oder beeinflusst oder eingestellt werden.

Erfindungsgemäß ist das Fahrzeug mit einer Rechenlogik zur Bestimmung der Steuerung des Abbiegelichts ausgerüstet, die zum Beispiel auf einer Steuerregeleinheit im Fahrzeug läuft und/oder auf anderen Steuereinheiten im Fahrzeug integriert ist. Der Begriff Steuerung im Sinne der vorliegenden Erfindung umfasst eine solche Rechenlogik, solche Steuerregeleinheiten und solche Steuereinheiten.

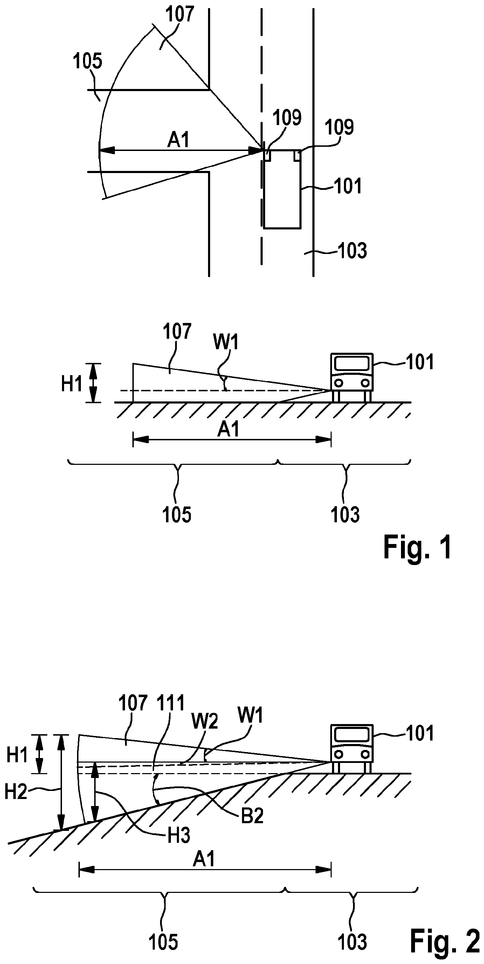

In der Figur 1 ist ein Fahrzeug 101 abgebildet, das sich auf einer Straße 103 befindet und in die Straße 105, in diesem Fall nach links, abbiegen will. Signalisiert wird das Abbiegen durch ein Setzen oder Aktivieren eines Fahrtrichtungsanzeigers. Das Fahrzeug 101 umfasst eine erfindungsgemäße Fahrzeugbeleuchtung mit zwei Abbiegelichtern 109, wobei nicht sämtliche Merkmale der Fahrzeugbeleuchtung der Übersicht halber im Detail dargestellt sind. Die obere Zeichnung gemäß Fig. 1 zeigt eine Draufsicht auf das Fahrzeug 101. Die untere Zeichnung gemäß Fig. 1 zeigt eine Ansicht von hinten auf das Fahrzeug 101.

Für ebene Straßen 103 und 105, das heißt die Steigungswerte beider Straßen sind nahezu Null, ist ein Ausleuchtungsbereich 107 des linken Abbiegelichts 109 eingezeichnet. In diesem Ausleuchtungsbereich sollte bei ebenen Straßen durch eine Werkseinstellung üblicherweise kein anderer Verkehrsteilnehmer durch das linke Abbiegelicht 109 geblendet werden. Die Ausführungen gelten analog für das rechte Abbiegelicht 109.

Die Ausleuchtung des Abbiegelichts 109 kann bei ebener Strecke vermessen werden. Die Helligkeit des Abbiegelichts 109 soll zum Beispiel so konzipiert sein, dass es einen Bereich von etwa zum Beispiel 40m, ein üblicher Wert, ausleuchtet. Bis zu einem gewissen Abstand A1 vom Fahrzeug ist die Leuchtstärke des Abbiegelichts 109 so stark, dass ein anderer Verkehrsteilnehmer geblendet werden könnte, wenn er direkt in das Licht blicken würde. Um bei ebener Straße keine Verkehrsteilnehmer zu blenden, wird das Abbiegelicht 109 zum Beispiel so eingestellt sein, dass das Licht bis zur Entfernung A1 eine gewisse Höhe H1 nicht überschreitet. Ein Wert für H1 kann zum Beispiel die Augenhöhe eines normal großen Menschen sein. Damit kann zum Beispiel ein maximaler Winkel W1, mit dem das Abbiegelicht 109 nach oben abstrahlen darf, aus dem Abstand A1 und der Höhe H1 sowie der Höhe des Abbiegelichts am Fahrzeug ermittelt werden. Durch die Berechnung dieser Werte kann die Lichtcharakteristik des Abbiegelichts 109 entsprechend gesteuert werden, um eine Blendgefahr zu verringern.

In der Figur 2 ist eine Situation gezeigt (Ansicht von hinten auf das Fahrzeug 101), in der die Straße 105, in die eingebogen werden soll, abfallend ist. Eine hier nicht dargestellte Draufsicht entspricht der Draufsicht gemäß der oberen Zeichnung der Fig. 1. Das Abbiegelicht 109 erreicht in der Straße 105 eine größere Höhe H2 in der Entfernung A1. In diesem Fall ist die Wahrscheinlichkeit hoch, dass durch das Abbiegelicht 109 ein anderer Verkehrsteilnehmer geblendet werden kann. Um das zu verhindern, kann zum Beispiel ein maximaler Winkel bestimmt werden, mit dem das Abbiegelicht 109 nach oben leuchten darf.

In Abhängigkeit der Steigung (B2) der Straße 105 kann eine Höhe H3 bestimmt werden, bis zu der das Abbiegelicht 109 im Abstand A1 andere Verkehrsteilnehmer blenden würde. Von der im Fahrzeug 101 üblicherweise vorhandenen Navigationseinheit können die Steigungsdaten der Straßen, in die eingebogen werden soll bzw. auf der gerade gefahren wird, erhalten werden. Vorzugsweise verwendet das Navigationssystem digitale Kardendaten, die Steigungsinformationen für die Straßen umfassen, so dass diese digitalen Kartendaten auch anderen Systemen im Fahrzeug zur Verfügung gestellt werden können. Das ist beispielsweise mit bekannten Vernetzungssystemen im Fahrzeug, zum Beispiel CAN, möglich.

Mit diesen Informationen kann nun der neue maximale Winkel W2, mit dem das Abbiegelicht 109 nach oben abstrahlen darf, bestimmt werden, um keinen Verkehrsteilnehmer zu blenden. Das Abbiegelicht 109 kann dann so gesteuert oder eingestellt werden , dass andere Verkehrsteilnehmer auf der Straße 105, in die eingebogen werden soll, im modifizierten oder neuen Ausleuchtungsbereich 111 des Abbiegelichts 109 weniger oder gar nicht geblendet werden. Das Bezugszeichen 107 zeigt auf einen Ausleuchtungsbereich ohne Korrektur des Lichtkegels.

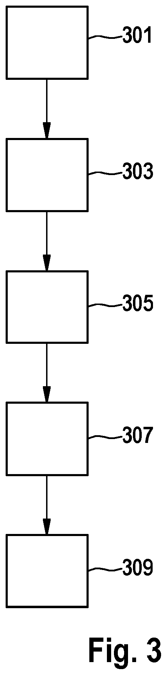

Gemäß einer Ausführungsform kann vorgesehen sein, dass, bevor das Abbiegelicht 109 eingeschaltet wird, eine Berechnung gestartet wird (vgl. Fig. 3). In Figur 3 wird ein beispielhaftes Ablaufdiagramm eines Verfahrens zum Betreiben eines Abbiegelichts 109 gezeigt, mit der das Abbiegelicht 109 entsprechend gesteuert werden kann. Das Verfahren wird durch das Einleiten eines Abbiegevorgangs 301 gestartet. Das kann durch einen gewissen Lenkeinschlag bei niedrigen Geschwindigkeiten und/oder Einschalten des Blinkers bei niedrigen Geschwindigkeiten geschehen. Im zweiten Schritt 303 wird die Steigung der Straße, in die gerade abgebogen wird, und eventuell die Steigung der Straße, auf der gerade gefahren wird, von der Navigationseinheit erhalten. Im nächsten Schritt 305 wird der maximale Winkel, mit der das Abbiegelicht 109 zum Beispiel in die Höhe strahlen darf, bestimmt. Mit diesem Wert können in einem weiteren Schritt 307 Parameter ermittelt werden, mit denen die Steuerung des Abbiegelichts 109 entsprechend eingestellt werden kann, um das Abbiegelicht 109 entsprechend den Vorgaben zu regeln. Im gleichen Schritt 307 oder in einem nächsten Schritt 309 kann das Abbiegelicht 109 eingeschaltet werden.

Nach einer Ausführungsform kann vorgesehen sein, dass nicht die Steigung der Straße, in die abgebogen werden soll, berücksichtigt wird, sondern die Steigung der Straße, auf der gerade gefahren wird, bei der Steuerung des Abbiegelichts 109 berücksichtigt wird.

Es kann vorzugsweise vorgesehen sein, dass nur die Steigung der Straße berücksichtigt wird, auf der das Fahrzeug fährt, also die Straße 103. Es kann vorzugsweise vorgesehen sein, dass zusätzlich zur Steigung der Straße 103 auch noch die Steigung der Straße berücksichtigt wird, in die das Fahrzeug einbiegen will, also die Straße 105

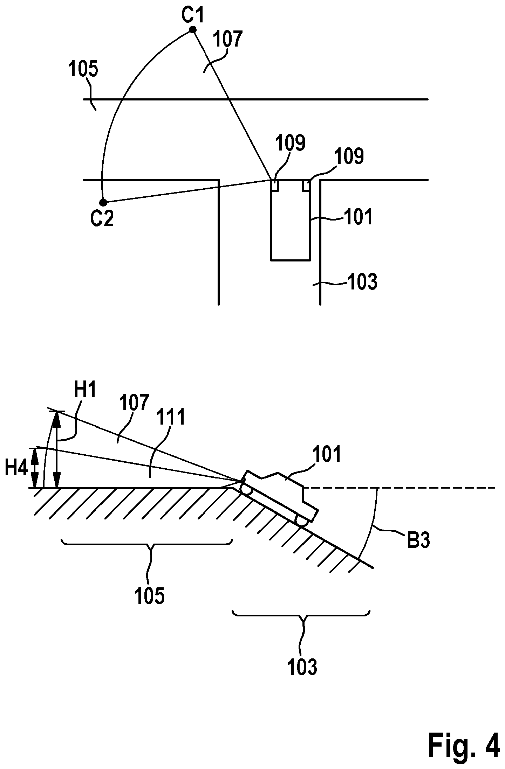

In Figur 4 ist eine Verkehrssituation an einer Kreuzung dargstellt (obere Zeichnung: Ansicht von oben, untere Zeichnung: Ansicht seitlich), in der die Straße 103 aus Sicht des Fahrzeugs 101 steil mit einer Steigung B3 ansteigt. Die Straße 105, in die das Fahrzeug links einbiegen soll, soll in diesem Beispiel zur Vereinfachung keine Steigung B4 aufweisen (Somit ist kein Bezugszeichen "B4" in der Figur 4 eingezeichnet). Der Ausleuchtungsbereich 107 für ein Abbiegelicht 109, das keine Steigung berücksichtigt, ist in der Figur schematisch bis zur Grenze, bis zu der ein Verkehrsteilnehmer geblendet werden könnte, wenn er direkt in das Abbiegelicht 109 schauen würde, eingezeichnet. Durch die Steigung der Straße 103 steht das Fahrzeug auch in einem nahezu ähnlichen Winkel zu der Straße, in die eingebogen werden soll, so dass das Licht im Bereich des rechten Fahrbahnrandes (als C1 gekennzeichnet) der Straße 105 höher scheinen wird, und im Bereich des linken Fahrbahnrandes (als C2 gekennzeichnet) der Straße 105 eine niedrigere Höhe erreichen wird. Damit können in diesem Fall Verkehrsteilnehmer, die sich im Bereich des rechten Fahrbahnrands der Straße 105 befinden, vom Abbiegelicht 109 geblendet werden. Die Steigung der Straße 103 kann aus der Navigationseinheit erhalten werden.

Die Steigung der Straße 103 kann auch mittels der (Längs-)Neigung des Fahrzeugs geschätzt werden. Eine Möglichkeit, die Neigung des Fahrzeugs zu bestimmen, sind Neigungssensoren, zum Beispiel Neigungssensoren eines Getriebes, und/oder Nickwinkelsensoren.

Mit der Steigung der Straße kann die Höhe H1 der Ausleuchtung des Abbiegelichts 109 bestimmt werden. Übertrifft die Höhe einen bestimmten, zum Beispiel vordefinierten Wert, der sicherstellt, dass das Abbiegelicht 109 keinen anderen Verkehrsteilnehmer blendet, kann das Abbiegelicht entsprechend angepasst werden. So kann der maximale Winkel, mit dem das Abbiegelicht 109 nach oben abstrahlen darf, eingestellt oder reduziert werden. Mit der neuen Einstellung ist in diesem Beispiel der Ausleuchtungsbereich 111 des Abbiegelichts dann so modifiziert, dass dieser die Höhe H4 nicht überschreitet. Eine andere Möglichkeit ist, das Abbiegelicht 109 in diesem Fall vorne stärker in der Ausbreitung nach oben einzuschränken als den Teil des Abbiegelichts 109, der nach hinten scheint. Das kann zum Beispiel durch gezieltes Zu- und Abschalten von Leuchtmitteln, zum Beispiel Leuchtdioden (LED)-Lichtern, des Abbiegelichts 109 bewirkt werden.

Nach einer Ausführungsform werden die beiden oben beschriebenen Fälle in Kombination berücksichtigt, also sowohl die Steigung der Straße 105, in die eingebogen werden soll, als auch die Steigung der Straße 103, auf der gerade gefahren wird, werden bei der Steuerung des Abbiegelichts 109 berücksichtigt.

Die Neigung des Fahrzeugs gegenüber der ebenen Straße kann mit der Steigung der Straße 103 bestimmt werden, die aus der Navigationseinheit erhalten werden kann. Eine weitere Möglichkeit, die Neigung des Fahrzeugs zu bestimmen, sind Neigungssensoren, zum Beispiel Neigungssensoren eines Getriebes, und/oder Nickwinkelsensoren. Es wird also insbesondere die Neigung des Fahrzeugs als Parameter berücksichtigen oder verwendet. Es wird also insbesondere die Neigung des Fahrzeugs als Parameter zusätzlich zur Steigung der Straße berücksichtigt oder verwendet.

In weiteren nicht gezeigten Ausführungsformen können zusätzlich berücksichtigt werden: Neigung des Fahrzeugs in Längsrichtung zum Beispiel wegen Beladung und/oder Querneigung und/oder Längsneigung des Fahrzeugs.

Gemäß einer nicht gezeigten Ausführungsform kann vorgesehen sein, dass bei der Steuerung des Abbiegelichts die Straßenbreite derjenigen Straße berücksichtigt wird, auf der das Fahrzeug gerade oder momentan fährt.

Im Rechtsverkehr wird sich ein Fahrzeug, das nach links abbiegen will, häufig in der Mitte der Straße befinden, um abzubiegen. Um die Höhe der Ausleuchtung des Abbiegelichts 109 in der einbiegenden Straße genauer bestimmen zu können, kann die Breite der Straße, auf der das Fahrzeug gerade fährt, berücksichtigt werden. Dieser Bereich hat Einfluss auf die maximale Höhe, die der Ausleuchtbereich 107 des Abbiegelichts 109 in der zum Beispiel abfallenden Straße erreichen kann.

Im Allgemeinen ist der Bereich der Straße quer zum Fahrzeug eben, das heißt, die Querneigung der Straße kann vernachlässigt werden. Die Straße, in die eingebogen werden soll, beginnt dann am Straßenrand, auf der sich das Fahrzeug befindet, abzufallen oder zu steigen. Wird der Anteil der eigenen Straße, der vom Abbiegelicht 109 ausgeleuchtet wird, bei der Berechnung berücksichtigt, kann die Entfernung, bei der der vordefinierte Höhenwert einer abfallenden Straße durch den Lichtkegel erreicht wird, genauer bestimmt werden.

Die Fahrbahnbreite kann mit verschiedenen Methoden ermittelt werden. Zum einen kann die Fahrbahnbreite und eventuell die Anzahl der Spuren in jede Richtung aus der Navigationseinheit erhalten werden. Ist die Fahrbahnbreite nicht in den Kartendaten der Navigationseinheit enthalten, können im Allgemeinen Informationen über die Straßenklasse erhalten werden. Aus der Straßenklasse kann indirekt die Fahrbahnbreite geschätzt werden, da Straßenklassen üblicherweise eine genormte Fahrbahnbreite haben.

Nach einer nicht gezeigten Ausführungsform kann vorgesehen sein, mit einem oder mehreren Kamerasystemen die momentane oder aktuelle Spur, auf der sich das Fahrzeug befindet, zu ermitteln. Mit der Information über die aktuelle Spur und der Straßenbreite kann die Entfernung des Fahrzeugs zum Straßenrand bestimmt oder geschätzt werden. Mit Kenntnis dieser Entfernung lässt sich der Ausleuchtungsbereich des Abbiegelichts 109 genauer bestimmen oder ermitteln und in der Steuerung des Abbiegelichts 109 berücksichtigen.

Nach einer nicht gezeigten Ausführungsform kann zusätzlich oder anstelle die Querneigung der Straße, auf der das Fahrzeug gerade fährt, und/oder die Querneigung der Straße, in die eingebogen werden soll, ermittelt und für die Abhängigkeit des Steuerns der Leuchtcharakteristik verwendet werden. Die Straßenneigung quer zur Fahrbahn kann in einem Navigationssystem gespeichert sein. Die Querneigung der Straße kann auch mit Neigungssensoren, die quer zur Fahrtrichtung ausgerichtet sein sind, gemessen werden.

Ist beim Abbiegen kein anderer Verkehrsteilnehmer in der Reichweite des Abbiegelichts 109 und kann somit gar nicht geblendet werden, kann die Einstellung des Scheinwerfers des Abbiegelichts ohne Berücksichtigung der Steigungen vorgenommen werden. Ob sich andere Verkehrsteilnehmer in diesem Bereich befinden, kann zum Beispiel durch entsprechende Kamerasysteme erfasst und mit Bildverarbeitungssystemen erkannt werden. Alternativ oder zusätzlich können sich verschiedene Verkehrsteilnehmer zum Beispiel durch Kommunikationstechniken wie Car2Car oder Car2X untereinander austauschen und mitteilen, ob sich einer der Verkehrsteilnehmer in dem Bereich des Abbiegelichts 109 befindet. Vorzugsweise können auch Radfahrer und/oder Fußgänger mit entsprechenden Kommunikationssystemen ausgerüstet sein, so dass Informationen über deren Position im Kreuzungsbereich bei der Steuerung des Abbiegelichts berücksichtigt werden können.

Vorzugsweise kann die Erfindung auch auf den Seitenstreifen und eventuellen Rad- und/oder Fußwegen am Rand der Straße, in die eingebogen werden soll, erweitert werden. Eine Blendung von Verkehrsteilnehmern kann somit auch in diesen Bereichen in vorteilhafter Weise vermieden werden.

In einer weiteren nicht gezeigten Ausführungsform kann vorgesehen sein, dass die erfindungsgemäßen Schritte initiiert werden, also das erfindungsgemäße Verfahren gestartet wird, wenn in Kreuzungsbereichen oder nach dem Setzen des Fahrtrichtungsanzeigers oder Lenkradeinschlägen bei kleinen Geschwindigkeiten, das Abbiegelicht 109 eingeschaltet werden soll.

Gemäß einer weiteren nicht gezeigten Ausführungsform kann vorgesehen sein, dass während der Fahrt, insbesondere kontinuierlich, der Randbereich der gerade gefahrenen Straße auf einem ansteigenden oder abfallenden Randbereich überprüft wird, wobei, vorzugsweise jederzeit, die Ausleuchtungsweite und -höhe berechnet werden, um das Abbiegelicht 109 bei Bedarf entsprechend einstellen zu können. So kann die Einstellung der Scheinwerfer des Abbiegelichts (auch Abbiegescheinwerfer genannt) sofort vorgenommen werden, sobald am Fahrzeug das Abbiegelicht eingeschaltet werden soll.

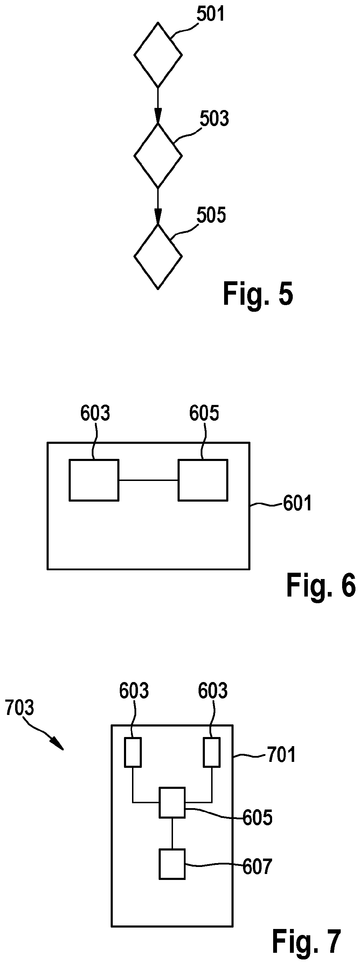

Figur 5 zeigt ein Ablaufdiagramm eines weiteren Verfahrens zum Betreiben eines Abbiegelichts eines Fahrzeugs.

In einem Schritt 501 wird zumindest ein eine Eigenschaft einer Umgebung eines Fahrzeugs beschreibender Umgebungsparameter ermittelt. In einem Schritt 503 wird eine Leuchtcharakteristik des Abbiegelichts basierend auf dem ermittelten Umgebungsparameter gesteuert, um gemäß eines Schritts 505 einen mittels dieses Abbiegelichts erzeugbaren Lichtkegel einzustellen. Anstelle oder zusätzlich zu dem Umgebungsparameter kann zumindest ein Parameter verwendet werden, wie er in der vorliegenden Beschreibung beschrieben wurde.

Figur 6 zeigt eine Fahrzeugbeleuchtung 601 für ein Fahrzeug (nicht gezeigt).

Die Fahrzeugbeleuchtung 601 umfasst ein Abbiegelicht 603 sowie eine Steuerung 605. Die Steuerung ist ausgebildet, eine Leuchtcharakteristik des Abbiegelichts in Abhängigkeit von zumindest einem eine Eigenschaft einer Umgebung des Fahrzeugs beschreibenden Umgebungsparameter zu steuern, um einen mittels des Abbiegelichts erzeugbaren Lichtkegel einstellen zu können.

Figur 7 zeigt ein Fahrzeug 701 umfassend eine Fahrzeugbeleuchtung 703. Die Fahrzeugbeleuchtung 703 umfasst zwei Abbiegelichter 603 und 605, die respektive in einem vorderen seitlichen Bereich (links und rechts) des Fahrzeugs 701 angeordnet sind und ausgebildet sind, bei Aktivierung Licht vom Fahrzeug weg in die Fahrzeugumgebung auszustrahlen, um einen seitlichen Bereich auszuleuchten. Ferner ist eine Steuerung 605 zur Steuerung der beiden Abbiegelichter 603 vorgesehen in Abhängigkeit von zumindest einem eine Eigenschaft einer Umgebung des Fahrzeugs 701 beschreibenden Umgebungsparameter, um einen mittels des Abbiegelichts erzeugbaren Lichtkegel einstellen zu können. Zum Ermitteln des Umgebungsparameters ist eine Parameterermittlungseinrichtung 607 vorgesehen, die ausgebildet ist, einen die Umgebung des Fahrzeugs beschreibenden Umgebungsparameter zu ermitteln.

## Patentansprüche

1. Verfahren zum Betreiben eines Abbiegelichts eines Fahrzeugs (101, 701), wobei eine Leuchtcharakteristik des Abbiegelichts (109, 603) basierend auf zumindest einem Parameter gesteuert wird, um einen mittels des Abbiegelichts (109, 603) erzeugbaren Lichtkegel einzustellen, wobei zumindest ein eine Eigenschaft einer Umgebung des Fahrzeugs (101, 701) beschreibender Umgebungsparameter als Parameter ermittelt wird und wobei eine Leuchtcharakteristik des Abbiegelichts (109, 603) basierend auf dem ermittelten Umgebungsparameter gesteuert wird, um einen mittels des Abbiegelichts (109, 603) erzeugbaren Lichtkegel einzustellen, **dadurch gekennzeichnet, dass** der Umgebungsparameter eine Steigung und/oder eine Querneigung einer Straße (105) ist, in die das Fahrzeug (101, 701) einbiegen will, und eine Steigung und/oder eine Querneigung einer Straße (103) ist, auf welcher das Fahrzeug (101, 701) momentan fährt.

2. Verfahren nach Anspruch 1, wobei die Leuchtcharakteristik eine Leuchtweite des Lichtkegels umfasst, wobei die Leuchtweite mittels einer Änderung einer Lichtintensität eines Leuchtmittels des Abbiegelichts (109, 603) gesteuert wird.

3. Verfahren nach Anspruch 1 oder 2, wobei die Leuchtcharakteristik einen Abstrahlwinkel des Lichtkegels umfasst, wobei der Abstrahlwinkel mittels einer variabel positionierbaren lichtundurchlässigen Abblendeinrichtung gesteuert wird.

4. Verfahren nach einem der vorherigen Ansprüche, wobei das Abbiegelicht (109, 603) mehrere Leuchtmittel umfasst, die zum Einstellen des Lichtkegels einzeln ab- oder angeschaltet werden.

5. Verfahren nach einem der vorherigen Ansprüche, wobei der erzeugbare Lichtkegel eingestellt wird, bevor das Abbiegelicht (109, 603) eingeschaltet wird.

6. Verfahren nach einem der vorherigen Ansprüche, wobei der erzeugte Lichtkegel im Betrieb des aktivierten Abbiegelichts (109, 603) abhängig von einem weiteren Parameter eingestellt wird.

7. Verfahren nach einem der vorherigen Ansprüche, wobei der Parameter eine Neigung, insbesondere eine Längsneigung und/oder eine Querneigung, des Fahrzeugs ist.

8. Verfahren nach einem der vorherigen Ansprüche, wobei der Parameter eine die Straße beschreibende Eigenschaft der Straße (105), in welcher das Fahrzeug einbiegen (101, 701) will, und/oder der Straße (103) ist, auf welcher das Fahrzeug (101, 701) momentan fährt.

9. Fahrzeugbeleuchtung (601, 703) für ein Fahrzeug (101, 701), umfassend ein Abbiegelicht (109) und eine Steuerung (605) zur Steuerung einer Leuchtcharakteristik des Abbiegelichts (109, 603) in Abhängigkeit von zumindest einem Parameter, um einen mittels des Abbiegelichts (109, 603) erzeugbaren Lichtkegel einstellen zu können, wobei die Steuerung ausgebildet ist, die Leuchtcharakteristik des Abbiegelichts (109, 603) in Abhängigkeit von zumindest einem eine Eigenschaft einer Umgebung des Fahrzeugs (101, 701) beschreibenden Umgebungsparameter als Parameter zu steuern, um einen mittels des Abbiegelichts (109, 603) erzeugbaren Lichtkegel einstellen zu können, **dadurch gekennzeichnet, dass** der Umgebungsparameter eine Steigung und/oder eine Querneigung einer Straße (105) ist, in die das Fahrzeug (101, 701) einbiegen will, und eine Steigung und/oder eine Querneigung einer Straße (103) ist, auf welcher das Fahrzeug (101, 701) momentan fährt.

10. Computerprogramm, umfassend Programmcode zur Durchführung des Verfahrens nach einem der Ansprüche 1 bis 8, wenn das Computerprogramm auf einem Computer ausgeführt wird.

## Claims

1. Method for operating a cornering light of a vehicle (101, 701), wherein a light-emission characteristic of the cornering light (109, 603) is controlled on the basis of at least one parameter to set a light cone that is able to be generated by means of the cornering light (109, 603), wherein at least one environment parameter describing a property of an environment of the vehicle (101, 701) is ascertained as a parameter and wherein a light-emission characteristic of the cornering light (109, 603) is controlled on the basis of the ascertained environment parameter to set a light cone that is able to be generated by means of the cornering light (109, 603), **characterized in that** the environment parameter is a slope and/or a cross slope of a road (105) into which the vehicle (101, 701) is intending to turn and is a slope and/or a cross slope of a street (103) on which the vehicle (101, 701) is currently driving.

2. Method according to Claim 1, wherein the light-emission characteristic comprises a luminous range of the light cone, wherein the luminous range is controlled by way of changing a light intensity of a light-emitting means of the cornering light (109, 603).

3. Method according to Claim 1 or 2, wherein the light-emission characteristic comprises a beam angle of the light cone, wherein the beam angle is controlled by means of a variably positionable opaque blocking device.

4. Method according to one of the preceding claims, wherein the cornering light (109, 603) comprises a plurality of light-emitting means, which are switched off or on for setting the light cone.

5. Method according to one of the preceding claims, wherein the light cone that is able to be generated is set before the cornering light (109, 603) is switched on.

6. Method according to one of the preceding claims, wherein the light cone generated is set during the operation of the activated cornering light (109, 603) in dependence on a further parameter.

7. Method according to one of the preceding claims, wherein the parameter is an inclination, in particular a longitudinal inclination and/or a lateral inclination, of the vehicle.

8. Method according to one of the preceding claims, wherein the parameter is a road-describing property of the road (105) into which the vehicle (101, 701) is intending to turn and/or of the road (103) on which the vehicle (101, 701) is currently driving.

9. Vehicle illumination (601, 703) for a vehicle (101, 701), comprising a cornering light (109) and a controller (605) for controlling a light-emission characteristic of the cornering light (109, 603) in dependence on at least one parameter to allow setting of a light cone that is able to be generated by means of the cornering light (109, 603), wherein the controller is embodied to control the light-emission characteristic of the cornering light (109, 603) in dependence on at least one environment parameter describing a property of an environment of the vehicle (101, 701) as a parameter in order to allow setting of a light cone that is able to be generated by means of the cornering light (109, 603), **characterized in that** the environment parameter is a slope and/or a cross slope of a road (105) into which the vehicle (101, 701) is intending to turn and is a slope and/or a cross slope of a road (103) on which the vehicle (101, 701) is currently driving.

10. Computer program, comprising program code for carrying out the method according to one of Claims 1 to 8 when the computer program is executed on a computer.

## Revendications

1. Procédé de fonctionnement d'un feu de tournant d'un véhicule (101, 701), une caractéristique d'éclairage du feu de tournant (109, 603) étant commandée sur la base d'au moins un paramètre afin de régler un cône lumineux qui peut être généré au moyen du feu de tournant (109, 603), au moins un paramètre d'environnement qui décrit une propriété d'un environnement du véhicule (101, 701) étant défini comme paramètre, et une caractéristique d'éclairage du feu de tournant (109, 603) étant commandée sur la base du paramètre d'environnement défini afin de régler un cône lumineux qui peut être généré au moyen du feu de tournant (109, 603), **caractérisé en ce que** le paramètre d'environnement est une pente et/ou une inclinaison transversale d'une route (105) dans laquelle le véhicule (101, 701) veut tourner, et est une pente et/ou une inclinaison transversale d'une route (103) sur laquelle le véhicule (101, 701) roule actuellement.

2. Procédé selon la revendication 1, la caractéristique d'éclairage comprenant une largeur d'éclairage du cône lumineux, la largeur d'éclairage étant commandée au moyen d'une variation d'intensité lumineuse d'une lampe du feu de tournant (109, 603).

3. Procédé selon la revendication 1 ou 2, la caractéristique d'éclairage comprenant un angle de rayonnement du cône lumineux, l'angle de rayonnement étant commandé au moyen d'un dispositif de masquage opaque positionnable de manière variable.

4. Procédé selon l'une des revendications précédentes, le feu de tournant (109, 603) comprenant une pluralité de lampes qui sont éteintes ou allumées individuellement pour régler le cône lumineux.

5. Procédé selon l'une des revendications précédentes, le cône lumineux qui peut être généré étant réglé avant que le feu de tournant (109, 603) ne soit allumé.

6. Procédé selon l'une des revendications précédentes, le cône lumineux généré pendant le fonctionnement du feu de tournant activé (109, 603) étant réglé en fonction d'un autre paramètre.

7. Procédé selon l'une des revendications précédentes, le paramètre étant une inclinaison, en particulier une inclinaison longitudinale et/ou une inclinaison transversale, du véhicule.

8. Procédé selon l'une des revendications précédentes, le paramètre étant une propriété, qui décrit la route, de la route (105) dans laquelle le véhicule (101, 701) veut tourner et/ou de la route (103) sur laquelle le véhicule (101, 701) roule actuellement.

9. Éclairage de véhicule (601, 703) destiné à un véhicule (101, 701) et comprenant un feu de tournant (109) et une commande (605) destinée à commander une caractéristique d'éclairage du feu de tournant (109, 603) en fonction d'au moins un paramètre pour pouvoir régler un cône lumineux qui peut être généré au moyen du feu de tournant (109, 603), la commande étant conçue pour commander comme paramètre la caractéristique d'éclairage du feu de tournant (109, 603) en fonction d'au moins un paramètre d'environnement qui décrit une propriété de l'environnement du véhicule (101, 701) afin de pouvoir régler un cône lumineux qui peut être généré au moyen du feu de tournant (109, 603), **caractérisé en ce que** le paramètre d'environnement est une pente et/ou une inclinaison transversale d'une route (105) dans laquelle le véhicule (101, 701) veut tourner, et une pente et/ou une inclinaison transversale d'une route (103) sur laquelle le véhicule (101, 701) se déplace actuellement.

10. Logiciel, comprenant un code de programme destiné à mettre en œuvre le procédé selon l'une des revendications 1 à 8, lorsque le logiciel est exécuté sur un ordinateur.
